# EUROPÄISCHE PATENTANMELDUNG

(11) **EP 4 517 513 A1**
(43) Veröffentlichungstag der Anmeldung: **05.03.2025**
(21) Anmeldenummer: 23194823.3
(22) Anmeldetag: 01.09.2023
(51) Int. Cl.: G06F 3/16, G06F 3/01

(54) **VERFAHREN ZUM BETRIEB EINES HAUSHALTSGERÄTES, HAUSHALTSGERÄT UND COMPUTERPROGRAMMPRODUKT**

(71) Anmelder: Vorwerk & Co. Interholding GmbH, 42275 Wuppertal (DE)
(72) Erfinder: Dering, Ingo, 42929 Wermelskirchen (DE); Echelmeyer, Benedikt, 44803 Bochum (DE)
(74) Vertreter: Bals & Vogel Patentanwälte PartGmbB

(57) **Zusammenfassung**

Die Erfindung betrifft ein Verfahren (100) zum Betrieb eines Haushaltsgerätes (200) und einem weiteren Gerät (300), umfassend:
- Starten (110) einer Haushaltsfunktion eines Haushaltsgerätes (200) durch eine Person (20),
- Aufbauen (120) und/oder Feststellen einer Kommunikationsverbindung zwischen dem weiteren Gerät (300) und dem Haushaltsgerät (200),
- Bestimmen (130), ob sich die Person (20) näher am Haushaltsgerät (200) oder dem weiteren Gerät (300) befindet,
- Ausgeben (140) zumindest eines Signals (30), welches spezifisch für die Haushaltsfunktion ist,
wobei das Signal (30) zumindest an dem Haushaltsgerät (200) oder dem Gerät (300) ausgegeben wird, welches sich am nächsten an der Person (20) befindet. Ferner betrifft die Erfindung ein Haushaltsgerät (200) und ein Computerprogrammprodukt.

## Beschreibung

Die Erfindung betrifft ein Verfahren, ein Haushaltsgerät sowie ein Computerprogrammprodukt.

Eine Sprachsteuerung bietet eine bequeme und intuitive Möglichkeit, Haushaltsgeräte zu steuern. Anstatt Tasten zu drücken oder komplexe Menüs zu durchsuchen, können Benutzer einfach Sprachbefehle verwenden, um gewünschte Aktionen an dem Gerät auszuführen. Dies erleichtert die Bedienung, insbesondere für Menschen mit eingeschränkter Mobilität oder technischem Verständnis. Benutzer können einfach Sprachbefehle geben, um verschiedene Aufgaben und Funktionen zu erledigen. Dies spart Zeit und ermöglicht es den Benutzern, sich auf andere Dinge zu konzentrieren, während die Haushaltsgeräte ihre Anweisungen umsetzen. Darüber hinaus kann es für einen Benutzer auch hilfreich sein, die Hände für eine andere Tätigkeit frei zu haben.

Zudem kann eine Sprachsteuerung auch die nahtlose Integration von Haushaltsgeräten in ein intelligentes, vernetztes Zuhause ermöglichen. Durch die Verbindung mit intelligenten Assistenten oder Sprachplattformen von bekannten Telekommunikationsanbietern können Benutzer verschiedene Geräte in ihrem Zuhause miteinander verknüpfen und steuern. Dadurch entsteht ein integriertes und interaktives Ökosystem von Geräten, das die Interaktion und Automatisierung erleichtert.

Auch eine Gestensteuerung kann eine Interaktion mit Geräten im Haushalt erleichtern.

Die Implementierung von Sprach- und/oder Gestensteuerung bei Haushaltsgeräten kann allerdings aufgrund verschiedener Faktoren Schwierigkeiten mit sich bringen.

Dadurch, dass der Benutzer die eine Eingabe per Sprach- und/oder Gestensteuerung nicht direkt durch das Berühren von Tasten am Gerät vornimmt, kann sich der Benutzer vom Gerät entfernen. Die Sprachsteuerung soll ihm zwar gerade dies ermöglichen, allerdings kann dies dazu führen, dass der Benutzer sich so weit entfernt, dass seine Eingaben nicht mehr zuverlässig erkannt werden oder die Rückmeldungen des Gerätes vom Benutzer akustisch und/oder optisch nicht mehr wahrgenommen werden. Hierbei spielen die Umgebungsparameter auch eine wesentliche Rolle, wie z. B. Nebengeräusche durch Radio oder andere Geräte, Umgebungslärm durch Straßenverkehr, starke Helligkeit bei direkter Sonneneinstrahlung, konkrete Ausgestaltung des Raumes durch störende Gegenstände usw.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung, ein Verfahren, ein Haushaltsgerät sowie ein Computerprogrammprodukt bereitzustellen, welches eine komfortable akustische Interaktion mit einem Haushaltsgerät, insbesondere auf einfache und zuverlässige Art und Weise, ermöglicht und insbesondere die Erkennung der Eingaben und die Verständlichkeit und/oder Sichtbarkeit der Ausgaben verbessert.

Die voranstehende Aufgabe wird gelöst durch ein Verfahren mit den Merkmalen des Anspruchs 1, ein Haushaltsgerät mit den Merkmalen des Anspruchs 12 sowie ein Computerprogrammprodukt mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Haushaltsgerät und/oder dem erfindungsgemäßen Computerprogrammprodukt und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Betrieb eines Haushaltsgerätes und einem weiteren Gerät vorgesehen, umfassend:
- Starten einer Haushaltsfunktion eines Haushaltsgerätes durch eine Person,
- Aufbauen und/oder Feststellen einer Kommunikationsverbindung zwischen dem weiteren Gerät und dem Haushaltsgerät, insbesondere durch eine Kommunikationsschnittstelle,
- Bestimmen, ob sich die Person näher am Haushaltsgerät oder dem weiteren Gerät befindet, insbesondere durch eine Recheneinheit,
- Ausgeben zumindest eines Signals, welches spezifisch für die Haushaltsfunktion ist, wobei das Signal zumindest an dem Haushaltsgerät oder dem Gerät ausgegeben wird, welches sich am nächsten an der Person befindet, insbesondere durch eine Ausgabe.

Mit anderen Worten kann eine Methode zur Steuerung von zwei Geräten vorgesehen sein, von dem zumindest eins dazu ausgeführt ist, eine Haushaltstätigkeit zumindest teilweise automatisch auszuführen, wobei die Methode umfasst, dass ein Benutzer (auch im folgenden Text nur Person genannt) das für die Haushaltstätigkeit ausgeführte Gerät startet und sich eine Verbindung mit dem zweiten Gerät aufbaut bzw. festgestellt wird, dass eine Verbindung vorhanden ist. Ferner umfasst die Methode, dass die Position des Benutzers in Relation zu den zwei Geräten derart bestimmt wird, dass eine Information darüber, ob sich der Benutzer näher an dem ersten oder zweiten Gerät befindet, erfasst wird. Es wird ferner ein Signal über eine Ausgabe zumindest an demjenigen der zwei Geräte ausgegeben, welches sich gemäß der Information am nächsten am Benutzer befindet.

Das Verfahren kann als computerimplementiertes Verfahren ausgeführt sein.

Die Verfahrensschritte können zumindest teilweise gleichzeitig und/oder zeitlich nacheinander ablaufen, wobei die Reihenfolge der Verfahrensschritte nicht durch die angegebene Reihenfolge begrenzt ist, sodass einzelne Schritte in unterschiedlicher Reihenfolge durchführbar sind. Ferner können einzelne oder sämtliche Schritte wiederholt durchgeführt werden.

Bei einem Haushaltsgerät kann es sich prinzipiell um jedes Gerät handeln, welches dazu ausgeführt ist, eine Person (gemeint ist einen Benutzer) bei der Durchführung einer Haushaltsaufgabe zu unterstützen. Es kann vorgesehen sein, dass das Haushaltsgerät zumindest als ein Kühl- und/oder Gefriergerät, Koch- und/oder Backgerät, Gerät zur Geschirr- oder Wäscheaufbereitung, Reinigungsgerät, Küchenkleingerät oder Küchenmaschine ausgeführt ist. Ein als Küchenmaschine ausgeführtes Haushaltsgerät kann zumindest für zwei der nachfolgenden Funktionalitäten ausgeführt sein: Mixen, Zerkleinern, Kochen, Garen, Dampfgaren, Braten, Rühren, Kneten, Wiegen, Messen, Rezeptbereitstellung. Ein als Reinigungsgerät ausgeführtes Gerät kann zumindest als Fensterreiniger, Staubsauger, Saugroboter oder Saugwischroboter ausgeführt sein. Es kann lediglich ein Haushaltsgerät vorgesehen sein. Es ist ferner denkbar, dass zumindest zwei oder mehrere Haushaltsgeräte vorgesehen sind.

Unter einem Betrieb eines Haushaltsgerätes kann die Verwendung des Gerätes verstanden werden, um die durch das Haushaltsgerät bestimmte Funktionen oder Aufgabe in einem Haushalt auszuführen. Der Betrieb kann alle Aktivitäten beinhalten, die notwendig sind, um das Gerät ordnungsgemäß zu nutzen.

Bei dem weiteren Gerät kann es sich prinzipiell um jedwede Art von Gerät handeln wie auch im Weiteren noch näher beschrieben ist. Es kann sich ebenfalls um ein Haushaltsgerät handeln. Es kann vorgesehen sein, dass das weitere Gerät als smart speaker ausgeführt ist und/oder einen smart speaker aufweist. Unter einem smart speaker kann insbesondere ein internetfähiges Gerät mit integriertem Sprachassistenten verstanden werden, welches dazu ausgeführt ist, auf Sprachbefehle zu reagieren und zumindest eine Aufgabe auszuführen. Smart speaker können mit einem intelligenten Sprachassistenten, insbesondere von bekannten Telekommunikationsanbietern ausgestattet sein. Es kann lediglich ein weiteres Gerät vorgesehen sein. Es ist ferner denkbar, dass zumindest zwei oder mehrere (weitere) Geräte vorgesehen sind.

Wenn der Einfachheit halber von Gerät gesprochen wird, kann sowohl ein Haushaltsgerät als auch ein weiteres Gerät gemeint sein.

Eine Haushaltsfunktion kann eine bestimmungsgemäße Funktion des Haushaltsgerätes sein. Beispielsweise kann die Haushaltsfunktion eines Backofens das Erwärmen des Garraumes sein. Mit anderen Worten kann die Haushaltsfunktion eine spezifische Aufgabe oder die Art der Tätigkeit sein, die ein bestimmtes Haushaltsgerät ausführt. Beispiele einer Haushaltsfunktion sind die Funktion des Waschens von Kleidung für eine Waschmaschine und das Reinigen von Böden für einen Staubsauger.

Das Aufbauen einer Kommunikationsverbindung kann umfassen, dass zwei oder mehr Kommunikationsendpunkte miteinander verbunden werden, um Informationen auszutauschen. Die Kommunikationsverbindung kann zumindest als Bluetooth-, WLAN-(Wireless Local Area Network), Zigbee-, Z-Wave-, LAN- (Local Area Network,), Infrarot-, NFC- (Near Field Communication) oder PLC- (Powerline Communication) Verbindung ausgeführt sein. Die Kommunikationsverbindung zwischen den Geräten kann grundsätzlich bereits vor dem Aufbauen bestehen. Dann kann das Vorhandensein der Kommunikationsverbindung lediglich festgestellt werden. Unter dem Aufbauen einer Kommunikationsverbindung kann verstanden werden, dass die Schritte unternommen werden, welche notwendig sind, um die Kommunikation zwischen dem Haushaltsgerät und dem weiteren Gerät zu ermöglichen.

Im Zusammenhang mit der Erfindung kann unter dem Bestimmen, ob sich die Person näher am Haushaltsgerät oder dem weiteren Gerät befindet, ein Verfahren aufgefasst werden, welches dazu ausgeführt ist eine Positionsinformation über die Position einer Person im Raum in Relation zu dem Haushalsgerät und dem weiteren Gerät zu ermitteln. Es kann vorgesehen sein, dass das Ergebnis des Bestimmens eine boolsche Information umfasst, welche entweder dem Haushaltsgerät oder dem weiteren Gerät entspricht. Mit anderen Worten kann eine Variable vorgesehen sein, welche nur den Wert "Haushaltsgerät" oder "weiteres Gerät" (bzw. Äquivalente davon, auch "0" und "1") annehmen kann und so bestimmt, welchem der beiden Geräte die Person näher ist. Weitere Ausgestaltungen des Bestimmens werden nachfolgend erläutert.

Das Ausgeben des zumindest einen Signals kann als eine Übermittlung einer Information verstanden werden, welche für die Person sensorisch wahrnehmbar ist. Das Signal ist spezifisch für die Haushaltsfunktion. Das Signal kann eine Information umfassen, welche von dem Haushaltsgerät und/oder dem weiteren Gerät bereitgestellt wird. Weitere Ausgestaltungen des Signals werden nachfolgend erläutert.

Gemäß der Erfindung wird das Signal zumindest an dem Haushaltsgerät oder dem Gerät ausgegeben, welches sich am nächsten an der Person befindet. Anders ausgedrückt kann das Signal zumindest auch an dem Gerät ausgegeben werden, welches der Person näher ist. Es kann vorgesehen sein, dass das Signal ausschließlich an dem Gerät ausgegeben wird, welches sich am nächsten an der Person befindet. Ferner kann vorgesehen sein, dass das Signal an beiden oder weiteren Geräten ausgegeben wird, wobei sich insbesondere die Intensität, insbesondere die Lautstärke, der Ausgabe an den Geräten unterscheiden oder gleich sein kann.

Insgesamt wird durch das erfindungsgemäße Verfahren der Vorteil erreicht, dass eine komfortable Interaktion mit einem Haushaltsgerät, insbesondere auf einfache und zuverlässige Art und Weise, ermöglicht und insbesondere die Erkennung der Eingaben und die Verständlichkeit und/oder Sichtbarkeit der Ausgaben verbessert wird. Das Starten einer Haushaltsfunktion eines Haushaltsgerätes durch eine Person stellt eine komfortable Art dar, das Verfahren auszuführen. Es sind insbesondere keine zusätzlichen Maßnahmen notwendig, etwa eine gesonderte Aktivierung um das Verfahren auszuführen. Das Aufbauen einer Kommunikationsverbindung zu dem weiteren Gerät bildet eine einfache Maßnahme, um Informationen zwischen den Geräten auszutauschen. Durch das Bestimmen, ob sich die Person näher am Haushaltsgerät oder dem weiteren Gerät befindet, wird durch eine einfache Maßnahme die Position der Person ermittelt. Durch das Ausgeben zumindest eines Signals, welches spezifisch für die Haushaltsfunktion ist, wobei das Signal zumindest an dem Haushaltsgerät oder dem Gerät ausgegeben wird, welches sich am nächsten an der Person befindet, erhöht sich für die Person der Komfort bei der Nutzung des Haushaltsgerätes und/oder weiteren Gerätes, da das Signal zuverlässig von der Person wahrgenommen werden kann.

Vorzugsweise kann bei einem erfindungsgemäßen Verfahren vorgesehen sein, dass das Bestimmen umfasst, die Entfernung und/oder einen Winkel zwischen dem Haushaltsgerät und dem weiteren Gerät zu ermitteln, und/oder dass das Bestimmen umfasst, die Entfernung der Person von dem Haushaltsgerät und/oder dem weiteren Gerät zu ermitteln.

Durch die Bestimmung der Entfernung und/oder dem Winkel zwischen den Geräten wird der Vorteil erreicht, dass neben der Information, zu welchem Gerät sich die Person näher aufhält, auch noch der Abstand und/oder der Winkel der Geräte untereinander bekannt ist.

Es kann vorgesehen sein, dass die Ausgabe des Signals an den Abstand und/oder der Winkel des Haushaltsgerätes und dem weiteren Gerät angepasst ist. Die Anpassung kann zumindest ausgeführt sein als eine Anpassung einer Lautstärke, einer Leuchtintensität, einer Darstellungsgröße, einer Latenz oder eines Abstrahlwinkels des Signals. Der Winkel kann ein Winkel zwischen zwei den Geräten zugeordneten Fronten, insbesondere eine Seite, die die Ausgabe aufweist, handeln. Bei mehr als insgesamt zwei Geräten kann der Winkel ferner der Winkel eines Gerätes zu zumindest zwei weiteren Geräten sein.

Durch die Ermittlung der Entfernung und/oder des Winkels der Person von dem Haushaltsgerät und/oder dem weiteren Gerät kann der Vorteil erreicht werden, dass erweiterte Informationen zur Position der Person in Relation zu den Geräten vorliegen. Diese Informationen können genutzt werden, um das Signal anzupassen. Die Anpassung kann zumindest ausgeführt sein als eine Anpassung einer Lautstärke, einer Leuchtintensität, einer Darstellungsgröße, einer Latenz oder eines Abstrahlwinkels des Signals. Der Winkel der Person kann insbesondere in Bezug auf eine Blickrichtung der Person ausgeführt sein. So kann beispielsweise ermittelt werden, ob eine Person einem Gerät zugewandt ist oder nicht und eine Anpassung erfolgen.

Ferner kann bei einem erfindungsgemäßen Verfahren vorteilhafterweise vorgesehen sein, dass ein zumindest teilweises Übergeben des Signals vom Haushaltsgerät zu dem weiteren Gerät vorgesehen ist, wenn sich die Person näher am weiteren Gerät befindet und/oder vom weiteren Gerät zu dem Haushaltsgerät vorgesehen ist, wenn sich die Person sich näher am Haushaltsgerät befindet. Anders ausgedrückt kann während der Ausgabe des Signals die Ausgabe zumindest teilweise an das jeweils andere Gerät übergeben werden, wenn die Person ihre Position in Relation zu den Geräten ändert. Dadurch wird der Vorteil erreicht, dass auch bei einem, insbesondere zeitlich länger andauernden, Signal die Person das Signal zuverlässig wahrnehmen kann. Die Ausgabe kann dann entweder ganz von dem anderen Gerät übernommen oder dort ergänzend ausgegeben werden.

Vorzugsweise kann bei einem erfindungsgemäßen Verfahren vorgesehen sein, dass ein Starten eines Eingabezeitfensters am Haushaltsgerät und/oder dem weiteren Gerät vorgesehen ist, wobei das Starten des Eingabezeitfensters und/oder eine Eingabe der Person am Haushaltsgerät und/oder dem weiteren Gerät während des Eingabezeitfensters zur Bestimmung, ob sich die Person näher am Haushaltsgerät oder dem weiteren Gerät befindet, verwendet wird. Mit anderen Worten kann durch eine Interaktion der Person an dem Haushaltsgerät und/oder dem weiteren Gerät ein Timer gestartet werden, wobei durch die Erkennung der Interaktion oder einer nachfolgenden Eingabe festgestellt wird, ob sich die Person näher am Haushaltsgerät oder dem weiteren Gerät befindet. Das Starten des Eingabezeitfensters kann zumindest als eine Spracheingabe, insbesondere als Aussprechen eines Aktivierungswortes, als Berühren eines Bedienelementes oder Zuwenden zum Gerät ausgeführt sein. Das Starten eines Eingabezeitfensters ist bei einer Vielzahl an Haushaltsgeräten und/oder weiteren Geräten standardmäßig vorgesehen. Somit wird durch die Verwendung des Startens der Vorteil erreicht, dass auf kostengünstige und einfache Art und Weise bestimmt werden kann, ob sich die Person näher am Haushaltsgerät oder dem weiteren Gerät befindet und dementsprechend die Ausgabe erfolgen kann.

Es ist ferner bei einem erfindungsgemäßen Verfahren denkbar, dass das Eingabezeitfenster zurückgesetzt wird, wenn eine Eingabe der Person am Haushaltsgerät und/oder dem weiteren Gerät erfolgt. Mit anderen Worten kann eine vorgesehene Dauer, in der eine Eingabe durch die Person erfolgen kann, durch eine Eingabe an einem der Geräte zurückgesetzt werden. Das Zurücksetzen kann effektiv einer Verlängerung des Eingabezeitfensters entsprechen. Das Zurücksetzen kann insbesondere dann vorteilhaft sein, wenn sich die Person während des Eingabezeitfensters das an einem der Geräte aktiviert wurde, zu dem anderen Gerät bewegt. Dann kann dort die Eingabe fortgeführt oder erneut innerhalb des verlängerten Zeitfensters durchgeführt werden.

Vorzugsweise kann bei einem erfindungsgemäßen Verfahren vorgesehen sein, dass das Eingabezeitfenster akustisch durch ein Aktivierungswort gestartet werden kann. Mit anderen Worten kann vorgesehen sein, dass eine Person durch das Aussprechen eines vorbestimmten Wortes ein Starten des Zeitfensters initiieren kann. Es kann eine Erkennung des Aktivierungswortes am Haushaltsgerät und/oder am weiteren Gerät vorgesehen sein, wobei die positive Erkennung des Aktivierungswortes das Eingabezeitfenster startet. Hierdurch wird der Vorteil erreicht, dass das Zeitfenster besonders komfortabel gestartet werden kann. Darüber hinaus muss das Aktivierungswort auch nicht erneut gesagt werden, um die Eingabe fortzusetzen. Im Zusammenhang mit den erfindungsgemäßen Verfahren ergibt sich somit insgesamt der Vorteil einer besonders einfachen und komfortablen Bedienung des Haushaltsgerätes und/oder des weiteren Gerätes. Insbesondere wenn auch das weitere Gerät durch Sprachsteuerung steuerbar ist, wird somit insgesamt der Vorteil erreicht, dass Eingaben ohne eine Berührung des Haushaltsgerätes und des weiteren Gerätes durchgeführt werden können.

Weiterhin kann bei einem erfindungsgemäßen Verfahren vorteilhafterweise vorgesehen sein, dass das Eingabezeitfenster durch eine Eingabe der Person am Haushaltsgerät und/oder dem weiteren Gerät verlängert und/oder zurückgesetzt wird. Mit anderen Worten kann durch eine innerhalb des Eingabezeitfensters erfolgte Eingabe eine Verlängerung des Zeitfensters erlauben. Dadurch wird verhindert, dass Eingaben der Person abgeschnitten und nicht wie durch die Person gewünscht berücksichtigt werden. Dies kann insbesondere dann von Vorteil sein, wenn sich die Person während des Eingabezeitfensters in Relation zu dem Haushaltsgerät und/oder dem weiteren Gerät bewegt.

Ferner kann bei einem erfindungsgemäßen Verfahren vorteilhafterweise vorgesehen sein, dass das Signal als akustisches Signal und/oder visuelles Signal ausgeführt ist, wobei insbesondere das Signal zumindest
- eine Warnung und/oder einen Hinweis,
- eine Bestätigung,
- eine Sprachausgabe nach einer manuellen Eingabe und/oder als Reaktion auf eine Spracheingabe bei der Sprachsteuerung, oder
- eine visuelle Ausgabe insbesondere zu oder nach einer Spracheingabe
umfasst.

Durch die Ausführung als akustisches Signal und/oder visuelles Signal lässt sich für die Person ein besonders hoher Bedienkomfort erreichen. Je nach Art des Signals haben Benutzer in der Regel eine Erwartung bezüglich der Art der Signalübermittlung, welche durch die akustische und/oder visuelle Widergabe in der Regel erfüllt werden können. Wenn das Signal Beispielsweise eine Warnung oder ein Hinweis ist, kann ein Warn- und/oder Hinweiston und/oder eine visuelle Warn- oder Hinweismeldung (beispielsweise in roter und/oder gelber Warn bzw. Hinweisfarbe) erfolgen. Eine Bestätigung kann durch einen von den Warnungen und/oder Hinweisen abweichenden Ton (welcher insbesondere tiefer ist als der Warn- und/oder Hinweiston) und/oder eine abweiche visuelle Bestätigungsmeldung (beispielsweise in blauer oder grauer oder grüner Bestätigungsfarbe). Eine Sprachausgabe nach einer manuellen Eingabe und/oder als Reaktion auf eine Spracheingabe bei der Sprachsteuerung kann durch eine künstliche Intelligenz erzeugt werden und insbesondere einen Teil der Spracheingabe der Person umfassen. Dadurch wird der Komfort der Person bei der Nutzung des Haushaltsgerätes weiter erhöht. Alternativ oder in Ergänzung kann vorgesehen sein, dass das Signal vorab gespeicherte Sprachausgaben enthält. Dies ist bei oft benötigten Textbausteinen hilfreich, um Rechenressourcen zu sparen. Eine visuelle Ausgabe nach einer Spracheingabe kann ebenfalls den Komfort verbessern.

Es kann vorgesehen sein, dass das akustische Signal und das visuelle Signal inhaltlich voneinander abweichen. Beispielsweise kann als Antwort auf eine Spracheingabe akustisch bereits ein Folgehinweis erfolgen, während visuell zunächst nur die Spracheingabe bestätigt wird und umgekehrt. Hierdurch kann die Person gleichzeitig überprüfen, ob die Spracheingabe korrekt erkannt wurde und erhält bereits den nächsten Hinweis im Ablauf der Haushaltstätigkeit.

Weiterhin kann bei einem erfindungsgemäßen Verfahren vorteilhafterweise vorgesehen sein, dass ein Erfassen einer Eingabe am Haushaltsgerät und/oder dem weiteren Gerät vorgesehen ist, wobei insbesondere das Ausgeben des zumindest eines Signals, auch an dem Haushaltsgerät oder dem weiteren Gerät erfolgt, an dem die Eingabe erfasst wurde. Anders ausgedrückt kann durch eine Eingabe einer Person an einem Gerät die Ausgabe an dieses Gerät gekoppelt wird. Hierdurch erhöht sicher der Benutzerkomfort, da die Ausgabe immer zumindest teilweise in der Nähe der Person erfolgt, sodass diese besonders einfach wahrgenommen werden kann.

Es ist ferner bei einem erfindungsgemäßen Verfahren denkbar, dass die Eingabe zumindest ausgeführt ist als:
- Einschalten des Haushaltgerätes und/oder dem weiteren Gerät, insbesondere durch eine Person und/oder gemäß eins Ablaufplans,
- Eingabe an einer Eingabeschnittstelle des Haushaltsgerätes und/oder dem weiteren Gerät, insbesondere als Sprachbefehl, insbesondere durch eine Person, oder
- eine Interaktion der Person mit der Haushaltsfunktion.

Das Einschalten des Hauthalsgerätes ist für die Person in der Regel ohnehin im Zusammenhang mit der Haushaltstätigkeit eine notwendige Tätigkeit. Daher kann durch die Ausführung der Eingabe als Einschalten der Komfort weiter erhöht werden. Es kann am Haushaltsgerät und/oder am weiteren Gerät zum Einschalten ein Schalter vorgesehen sein und/oder das Einschalten kann per Eingabeinterface zumindest durch Berührung,

Sprachbefehl (z.B. "gehe im Rezept einen Schritt weiter"), insbesondere umfassend ein Aktivierungswort, oder Anschauen erfolgen. Ferner kann vorgesehen sein, dass das Einschalten zumindest teilweise automatisch, beispielsweise programmgesteuert vorgesehen ist. Z.B. kann bei einer Annäherung eines weiteren Gerätes an das Haushaltsgerät das Einschalten erfolgen. Beispielsweise kann durch eine Smartwatch ein Einschaltsignal an eine Waschmaschine gesendet werden, sodass diese beispielsweise bereits eine Beleuchtung einschaltet, wenn sich die Person nur in der Nähe befindet. Auch hierdurch wird der Benutzerkomfort erhöht.

Auch eine Eingabe an einer Eingabeschnittstelle des Haushaltsgerätes und/oder dem weiteren Gerät kann eine vorteilhafte Ausgestaltung der Eingabe sein. Im Zusammenhang mit der Nutzung des Haushaltsgerätes oder des weiteren Gerätes führt die Person in der Regel eine oder mehrere Eingaben am Haushaltsgerät oder weiteren Gerät durch. Daher kann auch durch diese Ausgestaltung der Komfort weiter erhöht werden, da die Person keine zusätzlichen Tätigkeiten ausführen muss.

Ferner wird durch die Ausgestaltung der Eingabe als eine Interaktion der Person mit der Haushaltsfunktion der Vorteil erreicht, dass durch die zur Durchführung der Haushaltstätigkeit ohnehin notwendigen Interaktionen die Eingabe erkannt wird und für das erfindungsgemäße Verfahren genutzt werden kann. Auch hierdurch erhöht sich der Komfort der Person weiter, da die Person keine zusätzliche Tätigkeit ausführen muss.

Weiterhin ist es bei einem erfindungsgemäßen Verfahren denkbar, dass ein Kalibrieren zumindest eines Entfernungssensors vorgesehen ist, wobei das Kalibrieren insbesondere zumindest eine Angabe einer Position des Haushaltsgerätes und/oder des weiteren Gerätes und/oder Ausgabe eines Tonsignals und Aufnahme eines aus dem Tonsignal resultierenden Echos durch das Haushaltsgerät und/oder das weitere Geräte umfasst. Durch die Kalibrierung wird der Vorteil erreicht, dass die Messgenauigkeit verbessert wird. Mit anderen Worten stellt die Kalibrierung sicher, dass die gemessenen Werte mit den tatsächlichen Entfernungen oder Größen in einem bestimmten Bereich übereinstimmen. Darüber hinaus lässt sich die Konsistenz der Messung dahingehend verbessern, dass kalibrierte Messgeräte konsistente Ergebnisse über die Zeit und unter den spezifizierten Bedingungen liefern. Dies ist besonders wichtig, wenn die Messungen in verschiedenen Umgebungen oder Situationen, insbesondere im Haushalt, durchgeführt werden.

Es kann vorgesehen sein, dass eine, insbesondere kalibrierte, Laufzeitmessung von Schallwellen vorgesehen ist. Durch die Kalibrierung wird die Messgenauigkeit verbessert, indem die Reaktionszeit und andere Faktoren berücksichtigt werden, die die Laufzeit des Schalls beeinflussen können. Ferner kann Schallausbreitung kann durch die Umgebung beeinflusst werden, z. B. durch Temperatur, Luftfeuchtigkeit und Luftdruck. Die Kalibrierung hilft dabei, diese Umwelteinflüsse zu berücksichtigen und die Messung entsprechend anzupassen, sodass die Genauigkeit erhöht wird.

Gemäß einem weiteren Aspekt der Erfindung ist ein Haushaltsgerät vorgesehen, umfassend:
- eine Eingabeschnittstelle, die dazu ausgeführt ist, ein Starten einer Haushaltsfunktion durch eine Person zu erfassen,
- eine Haushaltsfunktionseinheit, die dazu ausgeführt ist, eine Haushaltsfunktion auszuführen,
- eine Kommunikationsschnittstelle, die dazu ausgeführt ist, eine Kommunikationsverbindung zu einem weiteren Gerät aufzubauen,
- eine Recheneinheit, die dazu ausgeführt ist, zu bestimmen, ob sich die Person näher am Haushaltsgerät oder dem weiteren Gerät befindet, insbesondere durch die Abfrage von Positionsmessdaten von zumindest einem Sensor,
- eine Ausgabe, die dazu ausgeführt ist, zumindest ein Signal, welches spezifisch für die Haushaltsfunktion ist, auszugeben,
wobei das Signal zumindest an dem Haushaltsgerät oder dem Gerät ausgegeben wird, welches sich am nächsten an der Person befindet.

Die Eingabeschnittstelle kann zumindest einen Sensor aufweisen. Der Sensor kann zumindest dazu ausgeführt sein, ein akustisches Signal, insbesondere einen Sprachbefehl, eine Berührung, eine Annäherung, ein Ansehen des Haushaltsgerätes, eine Geste, oder das Drücken eines Schalters zu detektieren.

Die Haushaltsfunktionseinheit ist dazu ausgeführt, die Haushaltsfunktion durchzuführen. Je nach Haushaltsgerät kann eine Vielzahl von Haushaltsfunktionseinheiten vorgesehen sein. Bei der Haushaltsfunktionseinheit kann es sich prinzipiell um jede Vorrichtung handeln, welche dazu ausgeführt ist, als Teil des Haushaltsgerätes die Durchführung der Haushaltsaufgabe zu unterstützen. Es kann vorgesehen sein, dass die Haushaltsfunktionseinheit zumindest als Kühlaggregat, Heizvorrichtung, Wasserpumpe, Verdichter oder Elektromotor ausgeführt ist. Ferner kann eine Haushaltsfunktionseinheit, insbesondere im Zusammenhang mit einer Küchenmaschine, zumindest als eine der nachfolgenden Vorrichtungen ausgeführt sein: Mixer, Dickschichtheizung, Dampfgarer, Rührer, Knethaken, Waage, Uhr oder Rezeptspeicher.

Die Kommunikationsschnittstelle kann dazu ausgeführt sein, zumindest eine Kommunikationsverbindung über Bluetooth-, WLAN-, Zigbee-, Z-Wave-, LAN-, Infrarot-, NFC- oder PLC-Verbindung herzustellen und/oder einen der genannten Standards zu kommunizieren.

Die Recheneinheit kann je nach Komplexität des Haushaltgerätes unterschiedlich ausgeführt sein. Die Recheneinheit kann zumindest als Mikrocontroller, insbesondere ASIC, Embedded System, Prozessor, insbesondere System on a Chip (SoC), dedizierter Chipsatz, insbesondere FPGA (Field Programmable Gate Array) oder als cloudbasierte Recheneinheit ausgeführt sein. Mikrocontroller sind in der Regel besonders Energiesparend und kostengünstig. Embedded-Systeme ermöglichen insbesondere gegenüber Mikrocontrollern erweiterte Funktionen und können komplexere Aufgaben wie Echtzeitsensordatenauswertung, Motorsteuerung und Kommunikation bewältigen. Prozessoren und SoCs bieten auch gegenüber Embedded Systemen eine in der Regel noch höhere Leistung. Dies ermöglicht die z.B. Ausführung anspruchsvoller Software, Streaming von Medieninhalten und unterstützt die Nutzung komplexer Anwendungen in Smart-Geräten. Dedizierte Chipsätze sind für spezifische Aufgaben optimiert und bieten maßgeschneiderte Verarbeitung und Steuerung. Dadurch können sie hochspezialisierte Funktionen mit verhältnismäßig geringem Stromverbrauch unterstützen, die für die jeweiligen Haushaltsgeräte unerlässlich sind, wie etwa bei komplexen Küchenmaschinen oder Roboterstaubsaugern. Eine Cloud-basierte Verarbeitung bietet den Vorteil, dass auf die Rechenleistung und Ressourcen der Cloud zugegriffen werden kann, welche um ein Vielfaches höher liegen können als bei Recheneinheiten in dem Haushaltsgerät selbst. Dadurch können sie komplexe Aufgaben und Dienste nutzen, ohne an lokale Hardware-Beschränkungen gebunden zu sein. Cloud-basierte Lösungen sind in der Regel skalierbar und bieten Flexibilität für zukünftige Erweiterungen und Aktualisierungen.

Ferner kann vorgesehen sein, dass die Recheneinheit zumindest teilweise im weiteren Gerät angeordnet ist. Mit anderen Worten kann vorgesehen sein, dass das Haushaltsgerät Rechenoperationen durch das weitere Gerät übernehmen lassen kann. Hierdurch wird der Vorteil erreicht, dass sich die Rechenkapazität des Haushaltsgerätes durch weitere Geräte erhöht. Dies kann insbesondere dann von Vorteil sein, wenn die Steuerung des Haushaltsgerätes durch das Zusammenspiel mit weiteren Geräten komplexer wird, wodurch auch mehr Rechenoperationen anfallen.

Die Ausgabe ist dazu ausgeführt, zumindest ein Signal, welches spezifisch für die Haushaltsfunktion ist, auszugeben. Je nach Signalart können hierzu entsprechende Ausgaben vorgesehen sein. Ist das Signal ein akustisches Signal, kann die Ausgabe als Lautspreche ausgeführt sein. Ist das Signal ein optisches Signal, kann die Ausgabe als Anzeige, insbesondere als Display ausgeführt sein.

Es kann definitionsgemäß vorgesehen sein, dass das Haushaltsgerät das weitere Gerät zumindest rein rechtlich umfasst, da es mit dem Gerät auch in (direkter) Kommunikationsverbindung steht, wie beispielsweise die Fernbedienung zum Fernseher (auch wenn es sich um zwei baulich voneinander getrennte Teile/Geräte handelt). Auch kann das Haushaltsgerät mit dem weiteren Gerät (wobei das weitere Gerät auf nur ein Gerät beschränkt werden kann oder auch mehrere Geräte umfassen kann) als System verstanden und bezeichnet werden.

Insgesamt bringt somit ein erfindungsgemäßes Haushaltsgerät die gleichen Vorteile mit sich, wie sie bereits ausführlich mit Bezug auf ein erfindungsgemäßes Verfahren beschrieben worden sind.

Ferner kann bei einem erfindungsgemäßen Haushaltsgerät vorteilhafterweise vorgesehen sein, dass das weitere Gerät zumindest ausgeführt ist als:
- Tablet,
- Computer,
- Smartphone,
- Smart Watch,
- Kopfhörer, insbesondere mit zumindest einem Mikrofon,
- Lautsprecher, insbesondere Bluetoothlautsprecher,
- Smarte Lautsprecher, oder
- Fernseher.

Ein Tablet bietet den Vorteil, dass dieses in der Regel ein größeres Display aufweist als ein Haushaltsgerät. Die erleichtert die Bedienung und Navigation von Steuerungs-Apps, insbesondere des Haushaltsgerätes. Durch einen Computer kann eine höhere Leistungsfähigkeit erreicht werden. Computer bieten in der Regel eine höhere Rechenleistung und Speicherkapazität als Haushaltsgeräte, was die Handhabung insbesondere von komplexen Haushaltsgeräten und/oder darauf laufenden Anwendungen unterstützt. Smartphone bieten den Vorteil, Haushaltsgeräte von überall, insbesondere im Haus, steuern zu können. Da viele Menschen ihr Smartphone ständig bei sich tragen, ermöglicht es zudem einen schnellen und einfachen Zugriff auf die Steuerung von Haushaltsgeräten, sodass der Komfort erhöht wird. Eine Smart Watch bietet den Vorteil das Haushaltsgeräte bequem vom Handgelenk aus zu steuern, ohne dass das Smartphone oder andere Geräte aus der Tasche genommen werden müssen, wodurch sich ebenfalls der Komfort erhöht. Zusätzlich können Smart Watches Benachrichtigungen anzeigen oder einen Ton abspielen, wenn eine Aktion oder eine bestimmte Bedingung bei einem Haushaltsgerät eingetreten ist. Ein Kopfhörer, insbesondere mit Mikrofon ermöglicht es, akustische Signale zu übertragen, insbesondere Sprachbefehle freihändig an Haushaltsgeräte zu geben, ohne das Gerät direkt in die Hand nehmen zu müssen. Lautsprecher, insbesondere Bluetooth Lautsprecher, ermöglichen ebenfalls die akustische Ausgabe von Signalen, wobei insbesondere durch Bluetooth eine kabellose Verbindung hergestellt werden kann, was die Flexibilität bei der Platzierung und Bedienung bietet. Durch Smarte Lautsprecher, insbesondere mit einem integrierten Sprachassistenten bekannter Telekommunikationsanbieter, wird eine bequeme und natürliche Sprachsteuerung von Haushaltsgeräten ermöglicht. Ein Fernseher bietet den Vorteil eines in der Regel großen Displays. Ein großes Display ermöglicht eine übersichtliche Darstellung.

Weiterhin kann bei einem erfindungsgemäßen Haushaltsgerät vorteilhafterweise vorgesehen sein, dass ein dedizierter Entfernungssensor vorgesehen ist, wobei insbesondere der Entfernungssensor zumindest ausgeführt ist als
- Kamera,
- Infrarot-Sensor,
- Time-of-Flight Sensor,
- Radarsensor,
- Kapazitiver Sensor,
- Bluetooth Transceiver,
- Ultrabreitband Transceiver,
- Wifi Transceiver, oder
- Beamformingsensor.

Eine Kamera bietet den Vorteil, dass insbesondere durch fortschrittliche Bildverarbeitungsalgorithmen, Tiefeninformationen erfasst und so eine Entfernungsmessung ermöglicht wird. Kameras bieten in der Regel eine hohe Auflösung, was es ermöglicht, feine Details und Unterschiede in der Entfernung besser zu erkennen. Ein Infrarot-Sensor bietet den Vorteil, dass auch in dunklen Umgebungen oder bei Nacht Entfernungen präzise gemessen werden können. Zudem werden sie insbesondere im Gegensatz zu konventionellen Kameras nur geringfügig durch Umgebungslicht gestört. Time-of-Flight-Sensoren bieten Echtzeitmessungen von Entfernungen, was für Anwendungen mit sich ändernden Abständen besonders vorteilhaft ist. Darüber hinaus ermöglichen sie auch die Messung großer Entfernungen. Radarsensoren sind im Wesentlichen unabhängig von Lichtbedingungen und eignen sich daher für den Einsatz in unterschiedlichen Umgebungen, einschließlich Dunkelheit oder starkem Licht. Ferner können zumindest einige Materialien durchdrungen und Entfernungen hinter Hindernissen erfasst werden, was für einige Anwendungen von Vorteil sein kann. Kapazitive Sensoren ermöglichen eine berührungslose Messung von Entfernungen, was sie für Anwendungen besonders geeignet macht, bei denen keine direkte physische Berührung erforderlich ist. Zudem bieten sie insbesondere auf kurze Entfernungen eine hohe Genauigkeit. Bluetooth Transceiver, Ultrabreitband Transceiver und Wifi Transceiver bieten eine kommunikationsbasierte Entfernungsmessung. Auf Basis von Signalstärke oder Laufzeit können die Kommunikationssignale zwischen zwei Geräten analysiert werden, wodurch sich die Entfernung zuverlässig bestimmen lässt. Beamforming-Sensoren können die Entfernung zu einem Objekt in einer bestimmten Richtung genau bestimmen. Darüber hinaus können Störungen aus anderen Richtungen minimiert und so eine präzisere Entfernungsmessung ermöglicht werden.

Gemäß einem weiteren Aspekt der Erfindung ist ein Computerprogrammprodukt vorgesehen, umfassend Befehle, die bei der Ausführung des Programms durch einen Computer, insbesondere eine Recheneinheit eines erfindungsgemäßen Haushaltsgeräts, diesen veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren und/oder ein erfindungsgemäßes Haushaltsgerät beschrieben worden sind.

Gemäß einem weiteren Aspekt der Erfindung kann ein computerlesbares Speichermedium vorgesehen sein, umfassend Befehle, die bei der Ausführung durch einen Computer diesen veranlassen, ein erfindungsgemäßes Verfahren auszuführen.

Somit bringt ein erfindungsgemäßes computerlesbares Speichermedium die gleichen Vorteile mit sich, wie sie bereits ausführlich mit Bezug auf ein erfindungsgemäßes Verfahren und/oder ein erfindungsgemäßes Haushaltsgerät und/oder ein Computerprogrammprodukt beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1:: ein erfindungsgemäßes Verfahren,
- Fig. 2:: ein erfindungsgemäßes Haushaltsgerät, und
- Fig. 3:: Ausgestaltungsbeispiele von erfindungsgemäßen Haushaltsgeräten im Zusammenhang mit dem erfindungsgemäßen Verfahren.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

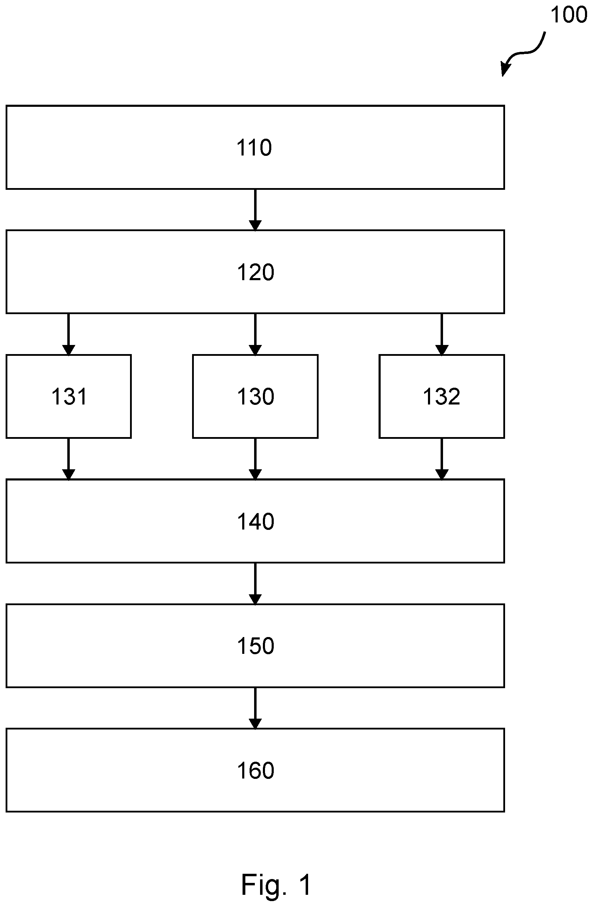

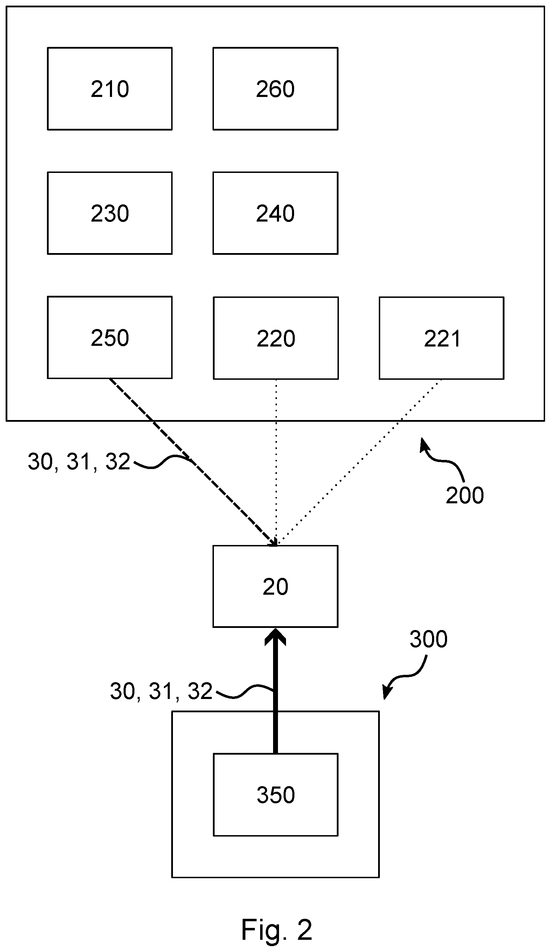

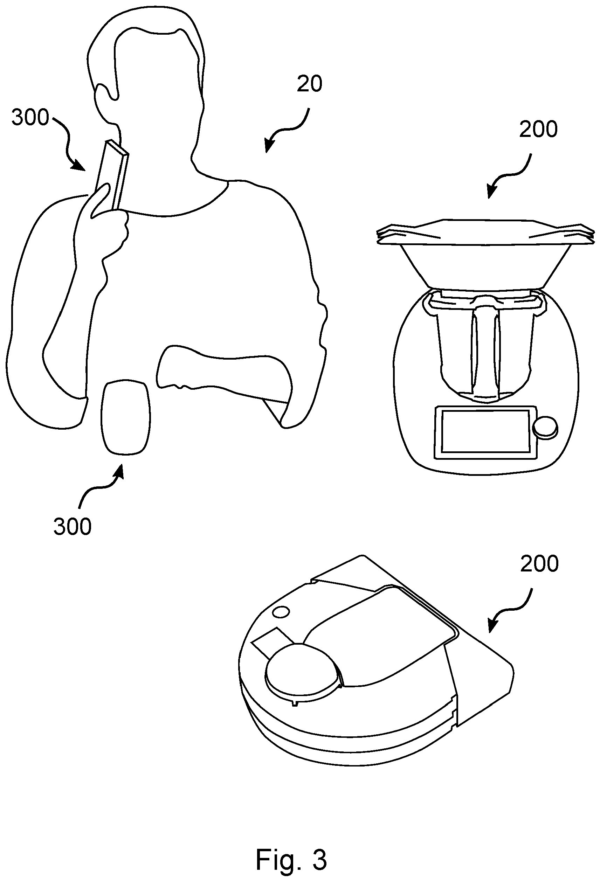

Figur 1 zeigt ein erfindungsgemäßes Verfahren 100 zum Betrieb eines Haushaltsgerätes 200 und einem weiteren Gerät 300 die Geräte 200, 300 sowie deren Teile sind im Zusammenhang mit den Figuren 2 und 3 dargestellt. Das Verfahren 100 umfasst ein Starten 110 einer Haushaltsfunktion eines Haushaltsgerätes 200 durch eine Person 20 (gemeint ist ein Benutzer; ebenfalls in Fig. 2 und 3 dargestellt), ein Aufbauen und/oder Feststellen 120 einer Kommunikationsverbindung zwischen dem weiteren Gerät 300 und dem Haushaltsgerät 200, ein Bestimmen 130, ob sich die Person 20 näher am Haushaltsgerät 200 oder dem weiteren Gerät 300 befindet, und ein Ausgeben 140 zumindest eines Signals 30, welches spezifisch für die Haushaltsfunktion ist. Das Signal 30 wird zumindest an dem Haushaltsgerät 200 oder dem Gerät 300 ausgegeben wird, welches sich am nächsten an der Person 20 befindet.

Das Verfahren 100 kann als computerimplementiertes Verfahren ausgeführt sein.

Die Verfahrensschritte können zumindest teilweise gleichzeitig und/oder zeitlich nacheinander ablaufen, wobei die Reihenfolge der Verfahrensschritte nicht durch die angegebene Reihenfolge begrenzt ist, sodass einzelne Schritte in unterschiedlicher Reihenfolge durchführbar sind. Ferner können einzelne oder sämtliche Schritte wiederholt durchgeführt werden.

Insgesamt wird durch das erfindungsgemäße Verfahren 100 der Vorteil erreicht, dass eine komfortable Interaktion mit einem Haushaltsgerät 200, insbesondere auf einfache und zuverlässige Art und Weise, ermöglicht und insbesondere die Erkennung der Eingaben und die Verständlichkeit der Ausgaben 250 verbessert wird. Das Starten einer Haushaltsfunktion eines Haushaltsgerätes 200 durch eine Person 20 stellt eine komfortable Art dar, das Verfahren 100 auszuführen. Es sind insbesondere keine zusätzlichen Maßnahmen notwendig, etwa eine gesonderte Aktivierung um das Verfahren 100 auszuführen. Das Aufbauen und/oder Feststellen 120 einer Kommunikationsverbindung zwischen dem Haushaltsgerät und dem weiteren Gerät 300 bildet eine einfache Maßnahme, um Informationen zwischen den Geräten 200, 300 auszutauschen. Durch das Bestimmen 130, ob sich die Person 20 näher am Haushaltsgerät 200 oder dem weiteren Gerät 300 befindet, wird durch eine einfache Maßnahme die Position der Person 20 ermittelt. Durch das Ausgeben 140 zumindest eines Signals 30, welches spezifisch für die Haushaltsfunktion ist, wobei das Signal 30 zumindest an dem Haushaltsgerät 200 oder dem Gerät ausgegeben wird, welches sich am nächsten an der Person 20 befindet, erhöht sich für die Person 20 der Komfort bei der Nutzung des Haushaltsgerätes 200 und/oder weiteren Gerätes 300, da das Signal 30 zuverlässig von der Person 20 wahrgenommen werden kann.

Bei dem Verfahren 100 kann vorgesehen sein, dass das Bestimmen 130 umfasst, die Entfernung und/oder einen Winkel zwischen dem Haushaltsgerät 200 und dem weiteren Gerät 300 zu ermitteln, und/oder dass das Bestimmen 130 umfasst, die Entfernung der Person 20 von dem Haushaltsgerät 200 und/oder dem weiteren Gerät 300 zu ermitteln.

Durch die Bestimmung der Entfernung und/oder dem Winkel zwischen den Geräten 200, 300 wird der Vorteil erreicht, dass neben der Information, zu welchem Gerät 200, 300 sich die Person 20 näher aufhält, auch noch der Abstand und/oder der Winkel der Geräte 200, 300 untereinander bekannt ist. Es kann vorgesehen sein, dass die Ausgabe 250 des Signals 30 an den Abstand und/oder der Winkel des Haushaltsgerätes 200 und dem weiteren Gerät 300 angepasst ist. Die Anpassung kann zumindest ausgeführt sein als eine Anpassung einer Lautstärke, einer Leuchtintensität, einer Latenz oder eines Abstrahlwinkels des Signals 30. Der Winkel kann ein Winkel zwischen zwei den Geräten 200, 300 zugeordneten Fronten, insbesondere eine Seite, die die Ausgabe 250 aufweist, handeln. Bei mehr als insgesamt zwei Geräten 200, 300 kann der Winkel ferner der Winkel eines Gerätes zu zumindest zwei weiteren Geräten 300 sein.

Durch die Ermittlung der Entfernung und/oder des Winkels der Person 20 von dem Haushaltsgerät 200 und/oder dem weiteren Gerät 300 kann der Vorteil erreicht werden, dass erweiterte Informationen zur Position der Person 20 in Relation zu den Geräten 200, 300 vorliegen. Diese Informationen können genutzt werden, um das Signal 30 anzupassen. Die Anpassung kann zumindest ausgeführt sein als eine Anpassung einer Lautstärke, einer Leuchtintensität, einer Latenz oder eines Abstrahlwinkels des Signals 30. Der Winkel der Person 20 kann insbesondere in Bezug auf eine Blickrichtung der Person 20 ausgeführt sein. So kann beispielsweise ermittelt werden, ob eine Person 20 einem Gerät zugewandt ist oder nicht und eine Anpassung erfolgen.

In der Fig. 1 sind im Verfahren 100 noch weitere Verfahrensschritte gezeigt. Es kann beispielsweise ein zumindest teilweises Übergeben 150 des Signals 30 vom Haushaltsgerät 200 zu dem weiteren Gerät 300 vorgesehen sein, wenn sich die Person 20 näher am weiteren Gerät 300 befindet und/oder vom weiteren Gerät 300 zu dem Haushaltsgerät 200 vorgesehen sein, wenn sich die Person 20 sich näher am Haushaltsgerät 200 befindet. Dadurch wird der Vorteil erreicht, dass auch bei einem, insbesondere zeitlich länger andauernden, Signal 30 die Person 20 das Signal 30 zuverlässig wahrnehmen kann.

Ferner kann ein Starten 160 eines Eingabezeitfensters am Haushaltsgerät 200 und/oder dem weiteren Gerät 300 vorgesehen sein, wobei das Starten 160 des Eingabezeitfensters und/oder eine Eingabe der Person am Haushaltsgerät 200 und/oder dem weiteren Gerät 300 während des Eingabezeitfensters zur Bestimmung 130, ob sich die Person 20 näher am Haushaltsgerät 200 oder dem weiteren Gerät 300 befindet, verwendet wird. Das Starten 160 des Eingabezeitfensters kann zumindest als eine Spracheingabe, insbesondere als Aussprechen eines Aktivierungswortes, als Berühren eines Bedienelementes oder Zuwenden zum Gerät 200, 300 ausgeführt sein. Das Starten eines Eingabezeitfensters ist bei einer Vielzahl an Haushaltsgeräten 200 und/oder weiteren Geräten 300 standardmäßig vorgesehen. Somit wird durch die Verwendung des Startens der Vorteil erreicht, dass auf kostengünstige und einfache Art und Weise bestimmt werden kann, ob sich die Person 20 näher am Haushaltsgerät 200 oder dem weiteren Gerät 300 befindet und dementsprechend die Ausgabe 250 erfolgen kann.

Das Eingabezeitfenster kann akustisch durch ein Aktivierungswort gestartet werden. Mit anderen Worten kann vorgesehen sein, dass eine Person 20 durch das Aussprechen eines vorbestimmten Wortes ein Starten des Zeitfensters initiieren kann. Hierdurch wird der Vorteil erreicht, dass das Zeitfenster besonders komfortabel gestartet werden kann. Im Zusammenhang mit den erfindungsgemäßen Verfahren 100 ergibt sich somit insgesamt der Vorteil einer besonders einfachen und komfortablen Bedienung des Haushaltsgerätes 200 und/oder des weiteren Gerätes 300. Insbesondere wenn auch das weitere Gerät 300 durch Sprachsteuerung steuerbar ist, wird somit insgesamt der Vorteil erreicht, dass Eingaben ohne eine Berührung des Haushaltsgerätes 200 und des weiteren Gerätes 300 durchgeführt werden können.

Das Eingabezeitfenster kann zurückgesetzt werden, wenn eine Eingabe der Person 20 am Haushaltsgerät 200 und/oder dem weiteren Gerät 300 erfolgt. Das Zurücksetzen kann effektiv einer Verlängerung des Eingabezeitfensters entsprechen. Das Zurücksetzen kann insbesondere dann vorteilhaft sein, wenn sich die Person 20 während des Eingabezeitfensters das an einem der Geräte 200, 300 aktiviert wurde, zu dem anderen Gerät 200, 300 bewegt. Dann kann dort die Eingabe fortgeführt oder erneut innerhalb des verlängerten Zeitfensters durchgeführt werden.

Bei einem erfindungsgemäßen Verfahren 100 kann ein Erfassen 131 einer Eingabe am Haushaltsgerät 200 und/oder dem weiteren Gerät 300 vorgesehen sein, wobei insbesondere das Ausgeben 140 des zumindest eines Signals 30, auch an dem Haushaltsgerät 200 oder dem weiteren Gerät 300 erfolgt, an dem die Eingabe erfasst wurde. Hierdurch erhöht sicher der Benutzerkomfort, da die Ausgabe 250 immer zumindest teilweise in der Nähe der Person 20 erfolgt, sodass diese besonders einfach wahrgenommen werden kann.

Bei einem erfindungsgemäßen Verfahren 100 kann auch vorgesehen sein, dass die Eingabe zumindest ausgeführt ist als:
- Einschalten des Haushaltgerätes 200 und/oder dem weiteren Gerät 300,
- Eingabe an einer Eingabeschnittstelle des Haushaltsgerätes 200 und/oder dem weiteren Gerät 300, insbesondere als Sprachbefehl, oder
- eine Interaktion der Person 20 mit der Haushaltsfunktion.

Das Einschalten des Hauthalsgerätes 200 ist für die Person 20 in der Regel ohnehin im Zusammenhang mit der Haushaltstätigkeit eine notwendige Tätigkeit. Daher kann durch die Ausführung der Eingabe als Einschalten der Komfort weiter erhöht werden. Es kann am Haushaltsgerät 200 und/oder am weiteren Gerät 300 zum Einschalten ein Schalter vorgesehen sein und/oder das Einschalten kann per Eingabeinterface zumindest durch Berührung, Sprachbefehl (z.B. "gehe im Rezept einen Schritt weiter"), insbesondere umfassend ein Aktivierungswort, oder Anschauen erfolgen. Ferner kann vorgesehen sein, dass das Einschalten zumindest teilweise automatisch, beispielsweise programmgesteuert vorgesehen ist. Z.B. kann bei einer Annäherung eines weiteren Gerätes 300 an das Haushaltsgerät 200 das Einschalten erfolgen. Beispielsweise kann durch eine Smartwatch ein Einschaltsignal an eine Waschmaschine gesendet werden, sodass diese beispielsweise bereits eine Beleuchtung einschaltet, wenn sich die Person 20 nur in der Nähe befindet. Auch hierdurch wird der Benutzerkomfort erhöht.

Auch eine Eingabe an einer Eingabeschnittstelle 210 des Haushaltsgerätes 200 und/oder dem weiteren Gerät 300 kann eine vorteilhafte Ausgestaltung der Eingabe sein. Im Zusammenhang mit der Nutzung des Haushaltsgerätes 200 oder des weiteren Gerätes führt die Person 20 in der Regel eine oder mehrere Eingaben am Haushaltsgerät 200 oder weiteren Gerät 300 durch. Daher kann auch durch diese Ausgestaltung der Komfort weiter erhöht werden, da die Person 20 keine zusätzlichen Tätigkeiten ausführen muss.

Ferner wird durch die Ausgestaltung der Eingabe als eine Interaktion der Person 20 mit der Haushaltsfunktion der Vorteil erreicht, dass durch die zur Durchführung der Haushaltstätigkeit ohnehin notwendigen Interaktionen die Eingabe erkannt wird und für das erfindungsgemäße Verfahren 100 genutzt werden kann. Beispiele für eine Interaktion 20 sind eine Veränderung einer Waageninformation, das Einstellen des Topfes oder das Schließen eines Deckels. Auch hierdurch erhöht sich der Komfort der Person 20 weiter, da die Person 20 keine zusätzliche Tätigkeit ausführen muss.

In der Fig. 2 ist ein erfindungsgemäßes Haushaltsgerät 200 gezeigt. Das gezeigte Haushaltsgerät 200 umfasst eine Eingabeschnittstelle 210, die dazu ausgeführt ist, ein Starten 110 einer Haushaltsfunktion durch eine Person 20 zu erfassen, eine Haushaltsfunktionseinheit 260, die dazu ausgeführt ist, eine Haushaltsfunktion auszuführen, eine Kommunikationsschnittstelle 230, die dazu ausgeführt ist, eine Kommunikationsverbindung zwischen einem weiteren Gerät 300 und dem Haushaltsgerät 200 aufzubauen und/oder festzustellen 120, eine Recheneinheit 240, die dazu ausgeführt ist, zu bestimmen 130, ob sich die Person 20 näher am Haushaltsgerät 200 oder dem weiteren Gerät 300 befindet, sowie eine Ausgabe 250, 350, die dazu ausgeführt ist, zumindest ein Signal 30, welches spezifisch für die Haushaltsfunktion ist, auszugeben 140. Das Signal 30 wird dabei zumindest an dem Haushaltsgerät 200 oder dem Gerät 300 ausgegeben, welches sich am nächsten an der Person 20 befindet.

Insgesamt bringt somit ein erfindungsgemäßes Haushaltsgerät 200 die gleichen Vorteile mit sich, wie sie bereits ausführlich mit Bezug auf ein erfindungsgemäßes Verfahren 100 beschrieben worden sind.

Die Fig. 2 stellt ferner schematisch ein Signal 30 dar. Es kann bei einem erfindungsgemäßen Verfahren vorgesehen sein, dass das Signal 30 ausgeführt ist als akustisches Signal 31 und/oder visuelles Signal 32, wobei insbesondere das Signal 30 zumindest
- eine Warnung und/oder einen Hinweis,
- eine Bestätigung,
- eine Sprachausgabe nach einer manuellen Eingabe und/oder als Reaktion auf eine Spracheingabe bei der Sprachsteuerung, oder
- eine visuelle Ausgabe nach einer Spracheingabe
umfasst.

Durch die Ausführung als akustisches Signal 31 und/oder visuelles Signal 32 lässt sich für die Person 20 ein besonders hoher Bedienkomfort erreichen. Je nach Art des Signals 30 sind haben Benutzer in der Regel eine Erwartung bezüglich der Art der Signalübermittlung, welche durch die akustische und/oder visuelle Widergabe in der Regel erfüllt werden können. Wenn das Signal 30 Beispielsweise eine Warnung oder ein Hinweis ist, kann ein Warn- und/oder Hinweiston und/oder eine visuelle Warn- oder Hinweismeldung (beispielsweise in roter und/oder gelber Warn bzw. Hinweisfarbe) erfolgen. Eine Bestätigung kann durch einen von den Warnungen und/oder Hinweisen abweichenden Ton (welcher insbesondere tiefer ist als der Warn- und/oder Hinweiston) und/oder eine abweiche visuelle Bestätigungsmeldung (beispielsweise in blauer oder grauer oder Grüner Bestätigungsfarbe). Eine Sprachausgabe nach einer manuellen Eingabe und/oder als Reaktion auf eine Spracheingabe bei der Sprachsteuerung kann durch eine künstliche Intelligenz erzeugt werden und insbesondere einen Teil der Spracheingabe der Person 20 umfassen. Dadurch wird der Komfort der Person 20 bei der Nutzung des Haushaltsgerätes 200 weiter erhöht. Alternativ oder in Ergänzung kann vorgesehen sein, dass das Signal 30 vorab gespeicherte Sprachausgaben enthält. Dies ist bei oft benötigten Textbausteinen hilfreich, um Rechenressourcen zu sparen. Eine visuelle Ausgabe 250 nach einer Spracheingabe kann ebenfalls den Komfort verbessern.

In Bezug auf den Entfernungssensor 220 ist in der Fig. 2 auch ein dedizierter Entfernungssensor 221 dargestellt. Dieser kann bei einem erfindungsgemäßen Haushaltsgerät 200 vorgesehen sein. Der Entfernungssensor 220 im Allgemeinen und auch der dedizierte Entfernungssensor 221 können ferner ausgeführt sein als
- Kamera,
- Infrarot-Sensor,
- Time-of-Flight Sensor,
- Radarsensor,
- Kapazitiver Sensor,
- Bluetooth Transceiver,
- Ultrabreitband Transceiver,
- Wifi Transceiver, oder
- Beamformingsensor.

Eine Kamera bietet den Vorteil, dass insbesondere durch fortschrittliche Bildverarbeitungsalgorithmen, Tiefeninformationen erfasst und so eine Entfernungsmessung ermöglicht wird. Kameras bieten in der Regel eine hohe Auflösung, was es ermöglicht, feine Details und Unterschiede in der Entfernung besser zu erkennen. Ein Infrarot-Sensor bietet den Vorteil, dass auch in dunklen Umgebungen oder bei Nacht Entfernungen präzise gemessen werden können. Zudem werden sie insbesondere im Gegensatz zu konventionellen Kameras nur geringfügig durch Umgebungslicht gestört. Time-of-Flight-Sensoren bieten Echtzeitmessungen von Entfernungen, was für Anwendungen mit sich ändernden Abständen besonders vorteilhaft ist. Darüber hinaus ermöglichen sie auch die Messung großer Entfernungen. Radarsensoren sind im Wesentlichen unabhängig von Lichtbedingungen und eignen sich daher für den Einsatz in unterschiedlichen Umgebungen, einschließlich Dunkelheit oder starkem Licht. Ferner können zumindest einige Materialien durchdrungen und Entfernungen hinter Hindernissen erfasst werden, was für einige Anwendungen von Vorteil sein kann. Kapazitive Sensoren ermöglichen eine berührungslose Messung von Entfernungen, was sie für Anwendungen besonders geeignet macht, bei denen keine direkte physische Berührung erforderlich ist. Zudem bieten sie insbesondere auf kurze Entfernungen eine hohe Genauigkeit. Bluetooth Transceiver, Ultrabreitband Transceiver und Wifi Transceiver bieten eine kommunikationsbasierte Entfernungsmessung. Auf Basis von Signalstärke oder Laufzeit können die Kommunikationssignale zwischen zwei Geräten analysiert werden, wodurch sich die Entfernung zuverlässig bestimmen 130 lässt. Beamforming-Sensoren können die Entfernung zu einem Objekt in einer bestimmten Richtung genau bestimmen 130. Darüber hinaus können Störungen aus anderen Richtungen minimiert und so eine präzisere Entfernungsmessung ermöglicht werden.

Die Fig. 3 zeigt schließlich zwei Varianten von erfindungsgemäßen Haushaltsgeräten 200. In dem dargestellten Beispiel ist sowohl ein Haushaltsgerät 200 als Saugwischroboter und/oder als Staubsaugerroboter und ein Haushaltsgerät 200 als Küchenmaschine dargestellt. Darüber hinaus sind auch zwei Varianten des weiteren Gerätes 300 gezeigt. Zum einen hält die Person 20 ein Smartphone als weiteres Gerät 300 in der Hand, zum anderen befindet sich die Person 20 in der Nähe eines smarten Lautsprechers.

Bei einem erfindungsgemäßen Haushaltsgerät 200 kann vorgesehen sein, dass das weitere Gerät 300 zumindest ausgeführt ist als:
- Tablet,
- Computer,
- Smartphone,
- Smart Watch,
- Kopfhörer, insbesondere mit zumindest einem Mikrofon,
- Lautsprecher, insbesondere Bluetoothlautsprecher,
- Smarte Lautsprecher, oder
- Fernseher.

Ein Tablet bietet den Vorteil, dass dieses in der Regel ein größeres Display aufweist als ein Haushaltsgerät 200. Die erleichtert die Bedienung und Navigation von Steuerungs-Apps, insbesondere des Haushaltsgerätes 200. Durch einen Computer kann eine höhere Leistungsfähigkeit erreicht werden. Computer bieten in der Regel eine höhere Rechenleistung und Speicherkapazität als Haushaltsgeräte 200, was die Handhabung insbesondere von komplexen Haushaltsgeräten 200 und/oder darauf laufenden Anwendungen unterstützt. Smartphone bieten den Vorteil, Haushaltsgeräte 200 von überall, insbesondere im Haus, steuern zu können. Da viele Menschen ihr Smartphone ständig bei sich tragen, ermöglicht es zudem einen schnellen und einfachen Zugriff auf die Steuerung von Haushaltsgeräten 200, sodass der Komfort erhöht wird. Eine Smart Watch bietet den Vorteil das Haushaltsgeräte 200 bequem vom Handgelenk aus zu steuern, ohne dass das Smartphone oder andere Geräte aus der Tasche genommen werden müssen, wodurch sich ebenfalls der Komfort erhöht. Zusätzlich können Smart Watches Benachrichtigungen anzeigen oder einen Ton abspielen, wenn eine Aktion oder eine bestimmte Bedingung bei einem Haushaltsgerät 200 eingetreten ist. Ein Kopfhörer, insbesondere mit Mikrofon ermöglicht es, akustische Signale 30 zu übertragen, insbesondere Sprachbefehle freihändig an Haushaltsgeräte 200 zu geben, ohne das Gerät direkt in die Hand nehmen zu müssen. Lautsprecher, insbesondere Bluetooth Lautsprecher, ermöglichen ebenfalls die akustische Ausgabe 250 von Signalen 30, wobei insbesondere durch Bluetooth eine kabellose Verbindung hergestellt werden kann, was die Flexibilität bei der Platzierung und Bedienung bietet. Durch Smarte Lautsprecher, insbesondere mit einem integrierten Sprachassistenten von bekannten Telekommunikationsanbietern, wird eine bequeme und natürliche Sprachsteuerung von Haushaltsgeräten 200 ermöglicht. Ein Fernseher bietet den Vorteil eines in der Regel großen Displays. Ein großes Display ermöglicht eine übersichtliche Darstellung.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 20: Person
- 30: Signal
- 31: akustisches Signal
- 32: visuelles Signal

- 100: Verfahren
- 110: Starten einer Haushaltsfunktion
- 120: Aufbauen und/oder Feststellen
- 130: Bestimmen
- 131: Erfassen
- 132: Kalibrieren
- 140: Ausgeben
- 150: Übergeben
- 160: Starten eines Eingabezeitfensters

- 200: Haushaltsgerät
- 210: Eingabeschnittstelle
- 220: Entfernungssensor
- 221: dedizierter Entfernungssensor
- 230: Kommunikationsschnittstelle
- 240: Recheneinheit
- 250: Ausgabe
- 260: Haushaltsfunktionseinheit

- 300: weiteres Gerät
- 350: Ausgabe

## Patentansprüche

1. Verfahren (100) zum Betrieb eines Haushaltsgerätes (200) und einem weiteren Gerät (300), umfassend:
- Starten (110) einer Haushaltsfunktion eines Haushaltsgerätes (200) durch eine Person (20),
- Aufbauen und/oder Feststellen (120) einer Kommunikationsverbindung zwischen dem weiteren Gerät (300) und dem Haushaltsgerät (200),
- Bestimmen (130), ob sich die Person (20) näher am Haushaltsgerät (200) oder dem weiteren Gerät (300) befindet,
- Ausgeben (140) zumindest eines Signals (30), welches spezifisch für die Haushaltsfunktion ist,
wobei das Signal (30) zumindest an dem Haushaltsgerät (200) oder dem Gerät (300) ausgegeben wird, welches sich am nächsten an der Person (20) befindet.

2. Verfahren (100) nach Anspruch 1,
**dadurch gekennzeichnet,**
**dass** das Bestimmen (130) umfasst, die Entfernung und/oder einen Winkel zwischen dem Haushaltsgerät (200) und dem weiteren Gerät (300) zu ermitteln, und/oder dass das Bestimmen (130) umfasst, die Entfernung der Person (20) von dem Haushaltsgerät (200) und/oder dem weiteren Gerät (300) zu ermitteln.

3. Verfahren (100) nach Anspruch 1 oder 2,
**dadurch gekennzeichnet,**
**dass** ein zumindest teilweises Übergeben (150) des Signals (30) vom Haushaltsgerät (200) zu dem weiteren Gerät (300) vorgesehen ist, wenn sich die Person (20) näher am weiteren Gerät (300) befindet und/oder vom weiteren Gerät (300) zu dem Haushaltsgerät (200) vorgesehen ist, wenn sich die Person (20) näher am Haushaltsgerät (200) befindet.

4. Verfahren (100) nach einem der vorhergehenden Ansprüche,
**dadurch gekennzeichnet,**
**dass** ein Starten (160) eines Eingabezeitfensters am Haushaltsgerät (200) und/oder dem weiteren Gerät (300) vorgesehen ist, wobei das Starten (160) des Eingabezeitfensters und/oder eine Eingabe der Person am Haushaltsgerät (200) und/oder dem weiteren Gerät (300) während des Eingabezeitfensters zur Bestimmung (130), ob sich die Person (20) näher am Haushaltsgerät (200) oder dem weiteren Gerät (300) befindet, verwendet wird.

5. Verfahren (100) nach Anspruch 4,
**dadurch gekennzeichnet,**
**dass** das Eingabezeitfenster zurückgesetzt wird, wenn eine Eingabe der Person (20) am Haushaltsgerät (200) und/oder dem weiteren Gerät (300) erfolgt.

6. Verfahren (100) nach Anspruch 4 oder 5,
**dadurch gekennzeichnet,**
**dass** das Eingabezeitfenster akustisch durch ein Aktivierungswort gestartet werden kann.

7. Verfahren (100) nach einem der Ansprüche 4 bis 6,
**dadurch gekennzeichnet,**
**dass** das Eingabezeitfenster durch eine Eingabe der Person (20) am Haushaltsgerät (200) und/oder dem weiteren Gerät (300) verlängert und/oder zurückgesetzt wird.

8. Verfahren (100) nach einem der vorhergehenden Ansprüche,
**dadurch gekennzeichnet,**
**dass** das Signal (30) ausgeführt ist als akustisches Signal (31) und/oder visuelles Signal (32), wobei insbesondere das Signal (30) zumindest
- eine Warnung und/oder einen Hinweis,
- eine Bestätigung,
- eine Sprachausgabe nach einer manuellen Eingabe und/oder als Reaktion auf eine Spracheingabe bei der Sprachsteuerung, oder
- eine visuelle Ausgabe, insbesondere zu einer Spracheingabe
umfasst.

9. Verfahren (100) nach einem der vorhergehenden Ansprüche,
**dadurch gekennzeichnet,**
**dass** ein Erfassen (131) einer Eingabe am Haushaltsgerät (200) und/oder dem weiteren Gerät (300) vorgesehen ist, wobei insbesondere das Ausgeben (140) des zumindest eines Signals (30), auch an dem Haushaltsgerät (200) oder dem weiteren Gerät (300) erfolgt, an dem die Eingabe erfasst wurde.

10. Verfahren (100) nach Anspruch 9,
**dadurch gekennzeichnet,**
**dass** die Eingabe zumindest ausgeführt ist als:
- Einschalten des Haushaltgerätes (200) und/oder dem weiteren Gerät (300),
- Eingabe an einer Eingabeschnittstelle des Haushaltsgerätes (200) und/oder dem weiteren Gerät (300), insbesondere als Sprachbefehl, oder
- eine Interaktion der Person (20) mit der Haushaltsfunktion.

11. Verfahren (100) nach einem der vorhergehenden Ansprüche,
**dadurch gekennzeichnet,**
**dass** ein Kalibrieren (132) zumindest eines Entfernungssensors (220) vorgesehen ist, wobei das Kalibrieren (132) insbesondere zumindest eine Angabe einer Position des Haushaltsgerätes (200) und/oder des weiteren Gerätes (300) und/oder Ausgabe eines Tonsignals und Aufnahme eines aus dem Tonsignal resultierenden Echos durch das Haushaltsgerät (200) und/oder das weitere Geräte (300) umfasst.

12. Haushaltsgerät (200) umfassend:
- eine Eingabeschnittstelle (210), die dazu ausgeführt ist, ein Starten (110) einer Haushaltsfunktion durch eine Person (20) zu erfassen,
- eine Haushaltsfunktionseinheit (260), die dazu ausgeführt ist, eine Haushaltsfunktion auszuführen,
- eine Kommunikationsschnittstelle (230), die dazu ausgeführt ist, eine Kommunikationsverbindung zwischen einem weiteren Gerät (300) und dem Haushaltsgerät (200) aufzubauen und/oder festzustellen (120),
- eine Recheneinheit (240), die dazu ausgeführt ist, zu bestimmen (130), ob sich die Person (20) näher am Haushaltsgerät (200) oder dem weiteren Gerät (300) befindet,
- eine Ausgabe (250, 350), die dazu ausgeführt ist, zumindest ein Signal (30), welches spezifisch für die Haushaltsfunktion ist, auszugeben (140),
wobei das Signal (30) zumindest an dem Haushaltsgerät (200) oder dem Gerät (300) ausgegeben wird, welches sich am nächsten an der Person (20) befindet.

13. Haushaltsgerät (200) nach Anspruch 12,
**dadurch gekennzeichnet,**
**dass** das weitere Gerät (300) zumindest ausgeführt ist als:
- Tablet,
- Computer,
- Smartphone,
- Smart Watch,
- Kopfhörer, insbesondere mit zumindest einem Mikrofon,
- Lautsprecher, insbesondere Bluetoothlautsprecher,
- Smarte Lautsprecher, oder
- Fernseher.

14. Haushaltsgerät (200) nach Anspruch 12 oder 13,
**dadurch gekennzeichnet,**
**dass** ein dedizierter Entfernungssensor (221) vorgesehen ist, wobei insbesondere der Entfernungssensor (220) zumindest ausgeführt ist als
- Kamera,
- Infrarot-Sensor,
- Time-of-Flight Sensor,
- Radarsensor,
- Kapazitiver Sensor,
- Bluetooth Transceiver,
- Ultrabreitband Transceiver,
- Wifi Transceiver, oder
- Beamformingsensor.

15. Computerprogrammprodukt umfassend Befehle, die bei der Ausführung des Programms durch einen Computer, insbesondere eine Recheneinheit (240) eines Haushaltsgeräts (200) nach einem der Ansprüche 12 bis 14, diesen veranlassen, ein Verfahren (100) nach einem der Ansprüche 1 bis 11 auszuführen.
